(19) **Europäisches Patentamt**

**European Patent Office**

**Office européen des brevets**

(11) **EP 0 631 805 B1**

(12) **EUROPEAN PATENT SPECIFICATION**

(45) Date of publication and mention
of the grant of the patent:
**19.08.1998 Bulletin 1998/34**

(51) Int. Cl.$^6$: **B01D 53/94**

(21) Application number: **94107771.1**

(22) Date of filing: **19.05.1994**

(54) **Method for removal of nitrogen oxides and catalysts used therein**

Methode zur Entfernung von Stickstoffoxiden und dabei verwendete Katalysatoren

Méthode pour l'élimination d'oxydes d'azote et catalyseurs utilisés à cette fin

(84) Designated Contracting States:
**DE GB IT**

(30) Priority: **19.05.1993 JP 140089/93**

(43) Date of publication of application:
**04.01.1995 Bulletin 1995/01**

(73) Proprietors:
- **MITSUBISHI CHEMICAL CORPORATION**
  **Chiyoda-ku, Tokyo (JP)**
- **MITSUBISHI JUKOGYO KABUSHIKI KAISHA**
  **Tokyo (JP)**
- **CATALYSTS & CHEMICALS INDUSTRIES CO.,**
  **LTD.**
  **Chiyoda-ku Tokyo (JP)**
- **MITSUBISHI CHEMICAL ENGINEERING CO.,**
  **LTD.**
  **Minato-ku, Tokyo (JP)**

(72) Inventors:
- **Hanada, Masayuki**
  **Kitakyushu-shi, Fukuoka-ken (JP)**
- **Nagano, Kiyoshi**
  **Kitakyushu-shi, Fukuoka-ken (JP)**
- **Koshikawa, Takeo**
  **Inashiki-gun, Ibaraki-ken (JP)**
- **Yamauchi, Akihiro**
  **Kawasaki-shi, Kanagawa-ken (JP)**
- **Oshida, Bunji**
  **Tokyo (JP)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(56) References cited:
**EP-A- 0 398 752**          **FR-A- 2 435 967**
**US-A- 4 608 361**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the Invention

The present invention relates to a method for removing nitrogen oxides (hereinafter referred to as NOx in some cases) present in a waste gas, by contacting said waste gas with a catalyst in the presence of a reducing agent (e.g. ammonia or a hydrocarbon) to catalytically reduce and remove the nitrogen oxides in the waste gas, as well as to a catalyst used in said method.

More particularly, the present invention relates to a method for removing nitrogen oxides present in a waste gas, by decomposing said nitrogen oxides into nitrogen and water efficiently in the presence of a reducing agent by the use of a shaped catalyst which has high mechanical strengths, excellent durability and high heat resistance at high temperatures of 450°C or above, as well as to a catalyst used in said method.

### Prior Art

In the conventional treatment of waste gases, the waste gases from boilers, etc. were treated mainly. Hence, the temperatures for the treatment were low at 450°C or below and the catalysts used for the treatment were mainly shaped catalysts (honeycomb catalysts) comprising titanium oxide as a main carrier and an active component (e.g. vanadium, tungsten or molybdenum). In order to allow a shaped catalyst (e.g. a honeycomb catalyst) to have increased mechanical strengths, it was proposed to add an inorganic fiber to a shaped catalyst [e.g. Japanese Patent Publication No. 20357/1976, Japanese Patent Publication No. 35055/1982, Japanese Patent Application Kokai (Laid-Open) No. 182036/1988 and Japanese Patent Application Kokai (Laid-Open) No. 208263/1990].

Since the adverse effect of this addition of inorganic fiber on the activity of shaped catalyst is small when the catalyst is used at low temperatures such as mentioned above, said addition of inorganic fiber was studied only from the standpoints of the moldability, shape retainability and mechanical strengths of inorganic fiber-added catalyst.

Meanwhile, the waste gases emitted from gas turbines, open-hearth furnaces for steel making, etc. have high temperatures. In the treatment of these waste gases to remove NOx present therein, there are required catalysts capable of exhibiting a sufficient activity even at high temperatures of above 450°C. Hence, there were proposed various catalysts [e.g. Japanese Patent Application Kokai (Laid-Open) No. 83039/1990].

In order for shaped catalysts (e.g. honeycomb catalysts) of industrial use to have sufficient shape retainability and sufficient mechanical strengths, it is essential that they contain an inorganic fiber.

FR-A-2 435 967 discloses a catalyst which is prepared from stock comprising 95 to 20 parts of weight of a heat-resistant fibre and 5 to 80 parts of weight of a catalyst-forming material.

In the inorganic fibers conventionally used in catalysts for waste gas treatment, however, no special attention was paid to their heat-resistance temperatures. Therefore, when they were used at high temperatures, they affected adversely on catalytic activity and invited reduction in catalytic activity; further, they were insufficient in durability, heat resistance, strength, etc.

### Summary of the Invention

The present invention relates to a method for removing NOx present in a high-temperature waste gas, by the use of an inorganic fiber-containing shaped catalyst which is low in reduction in denitration activity at high temperatures and which has high mechanical strengths, excellent durability and high heat resistance.

Accordingly, the present invention provides a method for removing nitrogen oxides present in a waste gas, comprising contacting said waste gas with a catalyst in the presence of a reducing agent, wherein said catalyst comprises:

(i) a carrier composed mainly of titanium oxide containing heat-resistant glass fibers having a heat-resistance temperature of 850°C or above, an average diameter of 1-20 $\mu$m and an average length of 0.5-15 mm, and
(ii) an active metal component loaded on the carrier,
characterised in that the waste gas is contacted with the catalyst at a temperature of 450-700°C; 2-15% by weight of the heat-resistant glass fibers are present based on the amount of the catalyst; and the heat-resistant glass fibers have a softening point of 900°C or above, a Young's modulus of 8000 kg/mm$^2$ or more at 22°C, a CaO content of 10% by weight or less, and a combined $Na_2O$ and $K_2O$ content of 0.76% by weight or less.

The present invention also provides a catalyst for use in the method of the present invention.

The catalyst used in the present invention is a shaped catalyst comprising (a) a carrier composed mainly of a titanium oxide and (b) an active metal component loaded on the carrier, and contains a heat-resistant inorganic fiber having a heat-resistance temperature of 850°C or above.

The heat-resistant inorganic fiber must have a heat-resistance temperature of 850°C or above. An inorganic fiber having a heat-resistance temperature lower than 850°C is undesirable because, when used at high temperatures, it invites reduction in mechanical strengths of catalyst and also incurs reduction in catalyst activity due to the components (e.g. calcium) contained in the inorganic fiber.

The heat-resistant inorganic fiber is a glass fiber having a softening point of 900°C or above, a Young's modulus of 8,000 kg/mm$^2$ at 22°C (this is required for the strength of the fiber), and a CaO content of 10% by weight or less. A catalyst containing such a fiber causes no reduction in activity even when used at high temperatures, and has excellent durability, high heat-crack resistance and high mechanical strengths. Inorganic glass fibers of conventional use containing a large amount of CaO gave a high reduction in catalyst activity at high temperatures.

In the present invention, the "heat-resistance temperature" of an inorganic fiber refers to a temperature which is 95% of the softening point of the inorganic fiber, and the "softening point" of an inorganic fiber refers to a temperature at which the inorganic fiber, when heated, begins to soften and deform. The softening point of a glass fiber is specified by a temperature at which the glass has a viscosity of $4.5 \times 10^7$ poises, and this temperature is obtained by measuring a temperature at which a glass sample of 0.55-0.75 mm in diameter and 23 cm in length is vertically suspended in an electric furnace and the upper portion of about 10 cm in length is heated, the sample is stretched by its own weight at a rate of 1 mm/min.

The catalyst used in the present invention is characterized by containing a heat-resistant inorganic fiber having an average diameter of 1-20 $\mu$m and an average length of 0.5-15 mm.

When the average diameter of the heat-resistant inorganic fiber is larger than 20 $\mu$m, such an inorganic fiber must be used in a large amount in order to obtain a shaped catalyst of desired strength, etc. and, moreover, such an inorganic fiber cannot be used in a honeycomb catalyst of thin wall thickness. When the average diameter is smaller than 1 $\mu$m, fibers are intertwined and get together and the resulting shaped catalyst tends to have cracks during drying and has a low strength.

When the average length of the heat-resistant inorganic fiber is larger than 15 mm, such an inorganic fiber cannot be used in a honeycomb catalyst of thin wall thickness, of industrial use in view of the moldability, etc. When the average length is smaller than 0.5 mm, the resulting catalyst has no desired strength, etc.

The average diameter of the heat-resistant inorganic fiber is preferably 2-10 $\mu$m and its average length is preferably 1-10 mm.

The content of the heat-resistant inorganic fiber is 2-15% by weight, preferably 3-10% by weight based on the catalyst in view of the activity, mechanical strengths, moldability, heat-crack resistance, etc. of catalyst.

The catalyst used in the present invention can be produced as follows, for example. That is, there are kneaded, with heating, a powder composed mainly of fired titanium oxide, a heat-resistant inorganic fiber as mentioned above, and an aqueous solution containing an active metal component, to obtain a mixture of desired water content; the mixture is extruded into a shaped material (e.g. a honeycomb material); the shaped material is dried and then fired at 450-900°C for 1-10 hours to obtain a shaped catalyst.

The shape of the shaped catalyst is exemplified by a sphere, a column, a cylinder, a ring and a honeycomb. A honeycomb catalyst is particularly preferable in industrial use. In the honeycomb catalyst, the desirable wall thickness is 0.2-2.0 mm, preferably 0.3-1.5 mm in view of the activity, strength, moldability, etc. of catalyst.

In the catalyst used in the present invention, the carrier comprising titanium oxide mainly may also comprise other components such as clay, zeolite and the like. The carrier desirably comprises titanium oxide in an amount of at least 50% by weight, preferably at least 70% by weight.

The active metal component loaded on the carrier may be an active metal component used in ordinary catalysts for reduction of nitrogen oxides, and is exemplified by copper, iron, rare earth elements, vanadium, tungsten, molyodenum, cerium and tin. The desirable amount of the active metal component loaded on the carrier is 1.0-30% by weight, preferably 3-20% by weight as oxide.

The heat-resistant inorganic fiber is a glass fiber. A glass fiber is particularly preferable in view of the compatibility with titanium oxide.

In the present invention, nitrogen oxides are reacted with a reducing agent in the presence of the present catalyst at 450-700°C, preferably at 500-650°C, whereby the nitrogen oxides are decomposed into nitrogen and water and removed.

The reducing agent may be a reducing agent such as ammonia, hydrocarbon or the like, ordinarily used in NOx removal. The other treatment conditions used in the present invention may be the same as ordinarily used in NOx removal.

The present invention is hereinafter described more specifically by way of Examples.

Example 1

In this Example, catalysts were produced.

## Catalyst production 1

There were mixed 17 kg of a powder of fired titanium oxide and 4 kg of an aqueous solution containing 50% by weight (as $WO_3$) of ammonium metatungstate. Thereto was added 8 kg of water, followed by sufficient kneading. Thereto was added 700 g of carboxymethyl cellulose. The mixture was kneaded with heating, to obtain a kneaded produce of desired water content. The kneaded product was extruded into a honeycomb material. The honeycomb material was sufficiently dried and then fired at 600°C for 5 hours to obtain a honeycomb catalyst A having a dimension of 70 mm x 70 mm x 300 mm (length) and an opening ratio of 69%, containing no inorganic fiber.

## Catalyst production 2

There were mixed 17 kg of a powder of fired titanium oxide, 1 kg of a glass fiber P having properties shown in Table 1 and a composition shown in Table 2, and 4 kg of an aqueous solution containing 50% by weight (as $WO_3$) of ammonium metatungstate. Thereto was added 8 kg of water, followed by kneading. The subsequent procedure was the same as in catalyst production 1, to obtain a honeycomb catalyst P containing 5% by weight of a glass fiber.

## Catalyst production 3, 4, 5, and 6

Honeycomb catalysts E, K, L and M were obtained in the same manner as in catalyst production 2 except that the glass fiber P was replaced by glass fibers E, K, L and M having properties shown in Table 1 and compositions shown in Table 2.

Table 1

| Properties of glass fibers | | | | |
|---|---|---|---|---|
| | Average diameter ($\mu$m) | Average length (mm) | Softening point (°C) | Young's modulus (kg/mm$^2$ at 22°C) |
| Glass fiber P | 6 | 3 | 970 | 8800 |
| Glass fiber E | 6 | 3 | 840 | 7700 |
| Glass fiber K | 2 | 1 | 1600 | 9000 |
| Glass fiber L | 5 | 6 | 1600 | 8500 |
| Glass fiber M | 6 | 3 | 750 | 6800 |

Table 2

| Compositions of glass fibers | | | | | | | |
|---|---|---|---|---|---|---|---|
| | Composition (wt. %) | | | | | | |
| | $SiO_2$ | $Al_2O_3$ | MgO | CaO | $K_2O$ | $Na_2O$ | $B_2O_3$ |
| Glass fiber P | 57 | 23 | 11.26 | 7.66 | 0.54 | 0.22 | - |
| Glass fiber E | 52 | 15 | 0.43 | 20.90 | 0.25 | 0.45 | 0.43 |
| Glass fiber K | 52 | 46 | 0.01 | 0.01 | 0.01 | 0.2 | 0 |
| Glass fiber L | 98 | 1.0 | 0 | 0.3 | 0 | 0.1 | 0 |
| Glass fiber M | 65 | 4.0 | 2.5 | 18 | 0.2 | 4.0 | 5.0 |

## Example 2

In this Example, the catalysts produced in Example 1 were evaluated. That is, the catalysts P, E, K, L and M were evaluated by the following methods.

Durability test:

Each catalyst was treated by contacting it with an air containing 10% by volume of moisture, at 620°C for 1,000 hours. Each catalyst was measured for mechanical strengths and denitration activity before and after the above treatment.

Mechanical strengths:

A cubic catalyst sample of 70 mm x 70 mm x 70 mm was measured for compression strengths of crosswise direction and axial direction, using a compression tester (a product of Tokyo Shikenki Seisakusho).

Denitration activity:

Denitration activity was evaluated by denitration ratio obtained at four different temperatures under the following conditions.

Gas composition

| | |
|---|---|
| NOx : | 100 ppm |
| $NH_3$ : | 100 ppm |
| $O_2$ : | 10% |
| $H_2O$ : | 10% |
| $N_2$ : | Balance |
| Space velocity : | 15,000 $hr^{-1}$ |

Incidentally, denitration ratio was calculated from the following formula.

Denitration ratio (%) = [1 - (NOx concentration after reaction) / (NOx concentration before reaction)] x 100

The results of evaluations are shown in Table 3.

As is clear from Table 3, the catalysts of the present invention cause a small reduction in denitration activity after durability test and have high mechanical strengths.

Table 3

| Results of performance evaluations | | | | | | | | | |
|---|---|---|---|---|---|---|---|---|---|
| Catalyst | Inorganic fiber | Durability test | Mechanical strengths $(kg/cm^2)$ | | Denitration degree (%) | | | | Remarks |
| | | | Crosswise direction | Axial direction | 450°C | 500°C | 550°C | 600°C | |
| A | Not used | Before | 2 | 7 | 94.7 | 93.6 | 91.3 | 80.3 | Control |
| | | After | 1 | 4 | 92.7 | 91.4 | 90.0 | 78.7 | |
| P | P | Before | 15 | 30 | 93.9 | 93.0 | 90.5 | 78.5 | Present invention |
| | | After | 12 | 25 | 92.0 | 90.1 | 87.9 | 76.0 | |
| E | E | Before | 13 | 26 | 93.8 | 92.9 | 90.4 | 77.9 | Comparison |
| | | After | 8 | 16 | 84.7 | 83.4 | 83.1 | 71.4 | |
| K | K | Before | 10 | 22 | 94.1 | 93.3 | 91.1 | 79.2 | Present invention |
| | | After | 8 | 20 | 92.4 | 91.0 | 88.7 | 77.1 | |
| L | L | Before | 13 | 24 | 94.0 | 93.3 | 90.9 | 79.0 | Present invention |
| | | After | 11 | 20 | 92.2 | 90.0 | 89.0 | 77.5 | |

EP 0 631 805 B1

Table 3 (continued)

| Results of performance evaluations | | | | | | | | | |
|---|---|---|---|---|---|---|---|---|---|
| Catalyst | Inorganic fiber | Durability test | Mechanical strengths (kg/cm$^2$) | | Denitration degree (%) | | | | Remarks |
| | | | Crosswise direction | Axial direction | 450°C | 500°C | 550°C | 600°C | |
| M | M | Before | 14 | 30 | 91.6 | 91.0 | 87.3 | 76.9 | Comparison |
| | | After | 7 | 15 | 81.7 | 81.1 | 80.8 | 70.8 | |

As is clear from Example 2, the catalysts of the present invention retain mechanical strengths of two-figure when expressed in kg/cm$^2$ unit even after the durability treatment, and maintain denitration degrees of 75% or more even at a high temperature of 600°C. Thus, the present invention has a very high industrial value.

**Claims**

1.  A method for removing nitrogen oxides present in a waste gas, comprising contacting said waste gas with a catalyst in the presence of a reducing agent, wherein said catalyst comprises:

    (i) a carrier composed mainly of titanium oxide containing heat-resistant glass fibers having a heat-resistance temperature of 850°C or above, an average diameter of 1-20 μm and an average length of 0.5-15 mm, and
    (ii) an active metal component loaded on the carrier,
    characterised in that the waste gas is contacted with the catalyst at a temperature of 450-700°C; 2-15% by weight of the heat-resistant glass fibers are present based on the amount of the catalyst; and the heat-resistant glass fibers have a softening point of 900°C or above, a Young's modulus of 8000 kg/mm$^2$ or more at 22°C, a CaO content of 10% by weight or less, and a combined $Na_2O$ and $K_2O$ content of 0.76% by weight or less.

2.  A catalyst for reducing and removing nitrogen oxides present in a waste gas, which comprises:

    (i) a carrier composed mainly of titanium oxide containing heat-resistant glass fibers having a heat-resistance temperature of 850°C or above, an average diameter of 1-20 μm and an average length of 0.5-15 mm, and
    (ii) an active metal component loaded on the carrier,
    characterised in that 2-15% by weight of the heat-resistant glass fibers are present based on the amount of the catalyst, and the heat-resistant glass fibers have a softening point of 900°C or above, a Young's modulus of 8000 kg/mm$^2$ or more at 22°C, a CaO content of 10% by weight or less, and a combined $Na_2O$ and $K_2O$ content of 0.76% by weight or less.

**Patentansprüche**

1.  Verfahren zur Entfernung von in Abgas vorhandenen Stickoxiden, umfassend die Kontaktierung des Abgases mit einem Katalysator in Gegenwart eines Reduktionsmittels, worin der Katalysator folgendes umfaßt:

    (i) Einen Träger, der hauptsächlich aus Titanoxid zusammengesetzt ist, das wärmebeständige Glasfasern mit einer Wärmebeständigkeitstemperatur von 850°C oder darüber, einem durchschnittlichen Durchmesser von 1 - 20 μm und einer durchschnittlichen Länge von 0,5 - 15 mm enthält, und
    (ii) eine auf den Träger aufgebrachte aktive Metallkomponente,
    **dadurch gekennzeichnet, daß** das Abgas bei einer Temperatur von 450 - 700°C mit dem Katalysator kontaktiert wird; 2 - 15 Gew.-% der wärmebeständigen Glasfasern auf Basis der Menge des Katalysators vorhanden sind; und die wärmebeständigen Glasfasern einen Erweichungspunkt von 900°C oder darüber, einen Young's-Modulus von 8000 kg/mm$^2$ oder mehr bei 22°C, einen CaO-Gehalt von 10 Gew.-% oder weniger, und einen kombinierten $Na_2O$- und $K_2O$-Gehalt von 0,76 Gew.-% oder weniger aufweisen.

2.  Katalysator zur Reduktion und Entfernung von in Abgas enthaltenen Stickoxiden, der folgendes umfaßt:

    (i) Einen Träger, der hauptsächlich aus Titanoxid zusammengesetzt ist, das wärmebeständige Glasfasern mit einer Wärmebeständigkeitstemperatur von 850°C oder darüber, einem durchschnittlichen Durchmesser von 1 - 20 μm und einer durchschnittlichen Länge von 0,5 - 15 mm enthält, und

(ii) eine auf den Träger aufgebrachte aktive Metallkomponente,
**dadurch gekennzeichnet, daß** 2 - 15 Gew.-% der wärmebeständigen Glasfasern auf Basis der Menge des Katalysators vorhanden sind; und die wärmebeständigen Glasfasern einen Erweichungspunkt von 900°C oder darüber, einen Young's-Modulus von 8000 kg/mm$^2$ oder mehr bei 22°C, einen CaO-Gehalt von 10 Gew.-% oder Weniger, und einen kombinierten Na$_2$O- und K$_2$O-Gehalt von 0,76 Gew.-% oder Weniger aufweisen.

**Revendications**

1.  Procédé d' élimination d'oxydes d'azote présents dans un gaz usé, comprenant les étapes consistant à mettre le gaz usé en contact avec un catalyseur en présence d'un agent réducteur, dans lequel ledit catalyseur comprend:

    (i) un support composé principalement de fibres de verre réfractaires contenant de l'oxyde de titane, présentant une température de résistance à la chaleur de 850°C ou plus, un diamètre moyen de 1-20μm et une longueur moyenne de 0,5-15 mm, et
    (ii) un composant métallique actif chargé sur le support,
    caractérisé en ce que le gaz usé est mis en contact avec le catalyseur à une température de 450-700°C; 2-15% en poids des fibres de verre réfractaires sont présents sur base de la quantité du catalyseur; et les fibres de verre réfractaires ont un point de ramollissement de 900°C ou plus, un module de Young de 8000 kg/mm$^2$ ou plus à 22°C, une teneur en CaO de 10% en poids ou moins, et une teneur combinée en Na$_2$O et K$_2$O de 0,76% en poids ou moins.

2.  Catalyseur pour réduire et éliminer des oxydes d'azote présents dans un gaz usé, qui comprend:

    (i) un support composé principalement de fibres de verre réfractaires contenant de l'oxyde de titane, présentant une température de résistance à la chaleur de 850°C ou plus, un diamètre moyen de 1-20μm et une longueur moyenne de 0,5-15 mm, et
    (ii) un composant métallique actif chargé sur le support,
    caractérisé en ce que 2-15% en poids des fibres de verre réfractaires sont présents sur base de la quantité du catalyseur, et les fibres de verre réfractaires ont un point de ramollissement de 900°C ou plus, un module de Young de 8000 kg/mm$^2$ ou plus à 22°C, une teneur en CaO de 10% en poids ou moins, et une teneur combinée en Na$_2$O et K$_2$O de 0,76% en poids ou moins.